# EUROPEAN PATENT APPLICATION

(11) **EP 4 768 157 A1**
(43) Date of publication of application: **01.07.2026**
(21) Application number: 24383472.8
(22) Date of filing: 27.12.2024
(51) Int. Cl.: B23B 29/02, B23B 27/00, F16F 7/10

(54) **ACTIVE DAMPENING BORING BAR FOR LESSENING VIBRATIONS IN A MACHINE TOOL**

(71) Applicant: Ideko, S.Coop., 20870 Elgoibar Guipuzcoa (ES)
(72) Inventor: ASTARLOA BADIOLA, Asier, 20870 Elgoibar (Gipuzkoa) (ES); MUÑOA GOROSTIDI, Jokin, 20870 Elgoibar (Gipuzkoa) (ES); BEUDAERT, Xavier, 20870 Elgoibar (Gipuzkoa) (ES); MANCISIDOR AIZPURUA, Iker, 20870 Elgoibar (Gipuzkoa) (ES)
(74) Representative: Plasseraud IP

(57) **Abstract**

The present invention relates to a boring bar (1000) with active dampening means (101) for lessening vibration in a machine tool, a head (102), a main body (100) of the bar (1000), a central area (21) and a peripheral area (22) of the bar (1000). The dampening means (101) comprise at least one electromagnetic effect actuator (1) with at least one casing (11) enclosing a respective cavity (12), at least one inertial mass (3), arranged in the cavity (12) which is movable with respect to the casing (11) of the actuator (1) due to the effect of an electromagnetic field. The actuator (1) is located in a respective housing (23), conjugate to the casing (11), in the peripheral area (22) of the bar (1000). The dampening means (101) comprise a set of coils (4) and permanent magnets (5), configured to act on the same plane perpendicular to the longitudinal direction.

## Description

### Technical field

The present invention belongs to the technical field of dampened boring bars for lessening vibration in a machine tool. Specifically, the invention relates to a boring bar with active electromagnetic or Lorentz dampening.

### State of the art

One of the most common problems in the workpiece machining sector are the vibrations caused by contact between workpieces and tool. The higher the contact force, the faster the machining speed, but at the same time the vibrations are also higher. Said vibrations are also often dependent on the length and diameter of the tool holders or workpiece. These vibrations reduce machining accuracy and can also cause stresses and strains on the machine that contribute to its deterioration.

A very clear case of this is internal lathing using boring bars, which is prone to develop vibrations due to the use of bars with high slenderness ratios (length to diameter, UD). The greater the slenderness, the easier it is for vibrations to be generated. In practice, bars with an L/D ratio greater than 4 have vibration problems that limit productivity, and above 7 make the operation impossible unless an anti-vibration system is incorporated into the bar.

This vibration generation is due to a regenerative effect known as chatter, a self-healing vibration of workpieces in machining systems, whose origin lies in the dominant vibration mode of the bar. This effect, due to the slenderness of the boring bars, is usually the first bending mode of the bar.

Self-healing vibrations in machining processes are a phenomenon that limits the productivity of said processes and reduces the surface quality of machined workpieces below that which is required. In addition, self-healing vibrations accelerate the wear of machine tool components and can lead to breakage of the cutting tool of the machine tool. These vibrations occur in a wide variety of machining operations and their elimination or reduction has become a major concern in order to increase production efficiency. Therefore, both its elimination and the prediction of this phenomenon is and will continue to be a problem to be addressed.

For large cantilever bars (L/D>10) said frequency is generally below 100 Hz, and for extreme cantilevers (L/D>20), the frequency may fall below 40 Hz. In addition, large diameter bars are used in large lathes, which have their own low-frequency modes that combine with those of the bar.

Various types of vibration dampeners are known for this purpose. These can be separated into passive and active ones.

Active dampeners capture said vibrations and actively apply stresses of opposite amplitude and frequency in order to cancel the same out. Small diameter bars are covered by passive solutions, as it is difficult to miniaturise an active solution and be price-competitive due to the cost of the actuator itself as well as the necessary electronics.

The scenario changes for large diameter and slender bars, wherein bars with passive dampeners are expensive and the active solution is cost-effective. For the sake of clarity, a large bar, or a bar having large size, is defined as a bar with a diameter greater than 100 mm and a slenderness greater than 14 L/D.

The use of active dampeners according to the physical principle of Lorentz Law, where an electromagnetic force is generated to suppress vibration, and reluctance dampeners, where a non-linear magnetic force of attraction is generated to suppress vibration, are well known in the art. Said non-linear character of reluctance dampers implies the use of advanced control methods for an optimal application, especially at higher displacements or amplitudes of motion occurring at low vibration frequencies.

However, the active dampener must be capable of introducing forces at these frequencies in order to eliminate vibration. Reluctance type actuators work very well at high frequency (greater than 100 Hz), because the required displacements of the inertial mass are smaller. As this displacement is in the direction of the magnetic field, it is possible to work with small air gaps and within the linear and controllable area of the actuator. When working at low frequencies, the required displacements of the inertial mass are much larger, forcing the use of large air gaps, which greatly reduces the force generated by reluctance-type actuators.

In this respect, a Lorentz-type dampener is better for low frequencies, i.e., for the vibrations to which large shafts are usually subjected.

Document EP3932596A1 describes the use of a dampening module with two actuators placed one behind the other in the axial direction of a bar, with different actuation angles. In this configuration, the actuators are placed at points with different modal displacement, so the effect on the bending mode is different for each actuator. Said actuators consist of a suspended mass the centre of gravity of which is centralised, i.e., aligned with the shaft of the boring bar, generating a radially directed force.

However, this structure makes it difficult to equally distribute the forces exerted by each actuator, and the parameters of each actuator, according to their position, must be compensated by their dimension or amplitude of movement so that they have an even effect at different points along the length of the bar.

Thus, it is necessary to develop a dampening solution that increases the ability for lessening vibration in a machine tool.

### Object of the invention

The present invention attempts to solve problems presented by prior art solutions such as those mentioned above, so as to increase the ability for lessening vibration in a machine tool.

To this end, the present invention relates to a solution for lessening vibrations in a machine tool and, more specifically, for a machine tool equipped with large-sized shaft boring bars.

Thus, a first aspect of the present invention relates to a boring bar with active dampening means for lessening vibrations in a machine tool, a head, a main body of the bar and at least one electromagnetic or Lorentz effect actuator. Said actuator comprises at least one casing enclosing a respective cavity, at least one inertial mass, arranged in the cavity and movable with respect to the casing of the actuator due to the effect of an electromagnetic field.

The at least one actuator is located in a respective housing, conjugate to the casing, in the peripheral area of the bar. The dampening means comprise a set of coils and permanent magnets, configured to act on the same plane perpendicular to the longitudinal direction.

As the actuator is located in a peripheral or external area, it is more easily accessible for a user, e.g. for maintenance, than in the central area.

The set of coils has a fixed configuration with respect to said casing of the actuator, while the inertial mass is arranged inside the cavity so that it is movable with respect to the casing of the actuator due to the effect of an electromagnetic force generated by the set of coils and permanent magnets in the cavity. In this sense, the set of coils is configured, together with the permanent magnets, to generate an electromagnetic force in a plurality of directions in the same plane perpendicular to the longitudinal direction of the interior of the cavity, and consequently, the inertial mass can be displaced in a plurality of directions perpendicular to the defined longitudinal direction of the bar, so that the vibrations of the bar can be counteracted. In addition, by acting on the same plane, it makes it easier to achieve an equal force on the entire said plane. Thus, the anti-vibration effect of the same inertial mass on different cross-sections of the bar is naturally the same without having to correct or compensate for said effect using other parameters. In this sense, the application in the same plane, since they do not have to be in series, and in the peripheral area of the bar, also facilitates the action of the mass on a point closer to the cantilever, or to the most distal point of the respective support of the bar, a point at which the greatest effectiveness of the actuator is usually achieved, as the greatest amplitudes of movement of the vibrations are found herein.

In addition, by placing the actuator in the peripheral portion and introducing the force in the tangential direction, it is possible to dampen not only the bending mode as with current solutions, but also to dampen and act on the torsional mode of the bar. This capability is particularly relevant for large bars, as these bars tend to generate higher torsional vibrations than smaller bars.

By means of at least one inertial actuator, the actuating force is applied externally or parallel to the shear forces on the bar, which avoids having to stiffen the bar to withstand said forces. For actuators that apply the actuating force in series, e.g., piezoelectric actuators, they must have a certain degree of stiffness to withstand the shear forces passing therethrough, and in the event of actuator failure, the bar cannot be used.

Due to the present invention, a simple solution is achieved that is less prone to technical problems, allowing the use of smaller dimensions in the actuator elements. In addition, as it is located in the peripheral area of the bar, it greatly facilitates the handling or replacement of the actuator during maintenance operations.

Due to the configuration of a boring bar according to the present invention, the central area of the boring bar remains free, and can be used for cutting coolant conduits and wiring of both the sensors placed in the machine tool head and the actuator itself. That is, a continuous, hollow, central inner duct can be achieved from one rear end of the main body to the head of the boring bar.

In a preferred embodiment, the boring bar is made of metal-coated composite material.

The fact that the bar is made of a composite material and a metal coating reduces the weight of the bar while maintaining a high level of robustness. By placing the modules on the external portion of the bar, the structural integrity of the central portion of the bar is maintained, allowing the use of lighter materials with high structural strength. This lightness allows, in turn, a greater capacity of the bar to absorb the vibrations coming from the machine, thus being able to lessen not only the self-induced vibrations of the bar, but also those coming from the machine.

In addition, the composite material allows a higher static stiffness than a metal, such as steel, despite having a lower density. For a bar of similar dimensions that is made of the composite material, this in turn facilitates that the same has somewhat higher frequencies of the vibration mode of the bar than another bar made of metal. Although the configuration of the dampening means of the present invention makes it possible to counteract low-frequency vibrations, compact active dampeners are more effective for higher frequencies, so that raising the vibration frequency of the same bar, even by a small amount, helps to improve the effect achieved by the dampening means.

In a more preferred embodiment, the composite material is made by means of automatic fibre laying and winding techniques.

The use of automatic fibre laying and winding techniques that allow precise positioning of fibres allows maximising the physical properties of a composite material.

In an even more preferred embodiment, the composite material is of the carbon-epoxy type.

A carbon-epoxy type material allows replacing metallic workpieces, achieving mechanical capabilities similar to those of a metallic part, at a significantly lower weight.

In an even more preferred embodiment, the composite material is a combination of PAN and UHM carbon fibres.

Using a combination of PAN (polyacrylonitrile) and UHM (Ultra High Modulus) carbon fibres, it is possible to manufacture high strength and stiffness carbon-epoxy components, capable of replacing metal workpieces, as they are much lighter.

In a preferred embodiment, the metal coating is done using EHLA techniques.

Using EHLA (Extreme High-speed Laser) techniques, a faster deposition and melt coating is achieved by metallurgically bonding the material through the melting process, preventing said coating from flaking, peeling or slipping. This means that the anti-corrosion and anti-wear protection of said coating on the bar is greater than with other techniques. This technique also allows for hybrid coatings, for example by applying a high wear-resistant layer on top of a corrosion-resistant layer.

The different aspects and embodiments of the invention defined above may be combined together, provided that they are mutually compatible. Additional advantages and features of the invention will become apparent from the detailed description that follows and will be particularly indicated in the attached claims.

### List of references according to the present invention

- 1000.: Boring bar
- 100.: Main body of the bar
- 101.: Active dampening means
- 1011.: Main body of the dampening means
- 1012.: First interface
- 1013.: Second interface
- 1.: Actuator
- 21.: Central bar area
- 22.: Peripheral bar area
- 23.: Housing
- 3.: Inertial mass
- 4.: Set of coils
- 41.: First winding
- 42.: Second winding
- 5.: Magnets
- 7.: Spring
- 8.: Longitudinal direction of the bar
- 11.: Casing
- 12.: Cavity
- 103.: Central inner duct
- 102.: Head

### Brief description of the figures

To help make the features of the invention more readily understandable, according to practical exemplary embodiments thereof, said description is accompanied by a set of drawings constituting an integral part thereof, which by way of illustration and not limitation represent the following:
Figure 1 schematically shows a perspective view of a boring bar comprising active dampening means according to an embodiment of the present invention, formed by a biaxial actuator.
Figure 2 schematically shows a cross section of a boring bar according to an embodiment of the present invention where a cross section of a biaxial actuator according to an embodiment of the present invention can be seen.
Figure 3 schematically shows a detail of the suspended mass of the biaxial actuator according to an embodiment of the present invention.
Figure 4 schematically shows a structural detail of the biaxial actuator according to an embodiment of the present invention.
Figure 5 schematically shows a perspective view of a boring bar comprising active dampening means according to another embodiment of the present invention, which comprises two linear actuators.
Figure 6 schematically shows a cross section of a boring bar according to the embodiment of figure 5 of the present invention where a cross section of two linear actuators can be seen.
Figure 7 schematically shows a longitudinal cross section of a bar according to the present invention.
Figure 8 schematically shows a structural detail of a dampening means comprising two linear actuators according to the embodiment of figure 5 of the present invention.

### Detailed description of the invention

In light of this description and figures, the person skilled in the art may understand that the invention has been described according to some preferred embodiments thereof, but that multiple variations may be introduced in said preferred embodiments without departing from the subject matter of the invention as claimed.

In a first aspect, the boring bar (1000) according to the present invention comprises active dampening means (101) for lessening vibrations in a machine tool, a head (102), a main body (100) of the bar (1000), a central area (21) and a peripheral area (22) of the bar (1000). The dampening means (101) comprise at least one electromagnetic effect actuator (1) comprising:
- at least one casing (11) enclosing a respective cavity (12);
- at least one inertial mass (3), arranged in the cavity (12), movable with respect to the casing (11) of the actuator (1) due to the effect of an electromagnetic field;

The at least one actuator (1) is located in a respective housing (23), conjugate to the casing (11), in the peripheral area (22) of the bar (1000). The dampening means (101) comprise a set of coils (4) and permanent magnets (5), configured to act on the same plane perpendicular to the longitudinal direction.

Specifically, the casing (11) of the at least one actuator (1) can be fitted into a housing comprised in the peripheral area (22) of the bar (1000). The arrangement of the casing (11) in the peripheral area of the dampener body allows a central area (21), free of interruptions, to be provided so that it can be used to connect the dampening means (101) to the other elements of the bar (1000), main body (100) and head (102).

Unlike other known solutions, the present invention, due to its configuration and to acting in the same plane, manages to counteract vibrations by means of displacement composition of the inertial mass (3) in any direction of a plane perpendicular to the longitudinal direction (8) in such a way that vibration is lessened, improving connectivity with other external elements by having a free central area. In addition, the relative displacement of the inertial mass (3) also counteracts the torsional vibrations of the bar by being located in a peripheral area of the bar.

Preferably, the dampening means (101) further comprise at least one acceleration sensor (not shown), attached to the casing (11) of the actuator (1), configured to measure accelerations of the bar (1000). Preferably, at least one biaxial sensor or two uniaxial sensors. In this way, the accelerations of the bar (1000) can be captured in any direction in a plane perpendicular to the longitudinal direction of the bar, on which the dampening means can act by means of the at least one actuator.

Preferably, the dampening means (101) may comprise an acceleration sensor (not shown), preferably attached to the casing (11) of the actuator (1). Said acceleration sensor (not shown) is configured to measure accelerations of the bar (1000), the accelerations having directions perpendicular to the longitudinal direction (8).

More preferably, the dampening means (101) may comprise control means (not shown). These control means allow adjusting the currents of the set of coils (4). For this purpose, they are arranged communicatively connected to the acceleration sensor (not shown) of the actuator (1), and are configured to adjust the currents of the set of coils (4) based on the measured accelerations of the actuator (1).

Preferably, the dampening means (101) comprise a first interface (1012), attachable to the head (102) of the bar (1000), a second interface (1013), attachable to the main body (100) of the bar (1000) and a main body (1011) comprising the at least one actuator (1) in its respective housing (23).

In this way, the dampening means can be attached to different boring bars (100) in a modular manner. In particular, the dampening means (101) are attached, by means of the first interface (1012) and the second interface (1013) to the head (102) and the main body (100) of the bar (1000) respectively, thus forming the bar (1000). The dampening means comprise the at least one actuator (1) housed in a respective housing (23), located in a peripheral area (22) of the bar (1000).

In accordance with the above configuration of modularity attachable to different boring bars (100), according to one embodiment, the control means are configured to perform a dynamic calibration, automatically adjusting to the dynamics of each boring bar, so that the optimal adjustment of the control parameters that minimise the dynamic flexibility of the boring bar (1000) to be dampened is performed.

The dynamics of the boring bar (1000) is defined by the length and diameter parameters and is also influenced by the dynamics of the machine on which it is mounted. The modular nature of the dampening means (101) ensures that it can be adapted to the dynamics of different bars by automatically setting the optimum control parameters for each case.

Furthermore, the dampening means (101) and the at least one actuator (1) may be configured so that the bar (1000) can be rotatable.

For this purpose, the actuator must avoid the critical speeds of the bar (1000), so the range of speeds at which the actuator could work (1) must be considered in its design. Moreover, the actuator must be prevented from creating a large imbalance in the bar. As it is located in a peripheral area (22), if the mass of the actuator is too large, an imbalance of the bar (1000) could be generated when rotating, creating an extra vibration. Therefore, the actuator (1) is designed so that its mass is equal to that of the circumferential material of the bar (1000).

Preferably, the dampening means (101) are configured so that they can be disconnected from a machine to which the bar (1000) is connected. This ensures that the bar is easily interchangeable.

The following are some of the possible embodiments of the present invention.

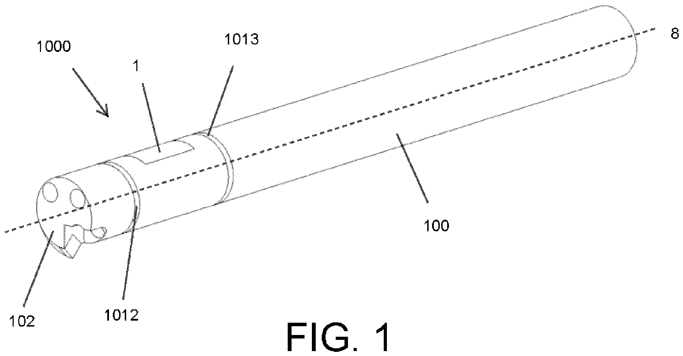

Figure 1 schematically shows a perspective view of a boring bar, (1000) as a machine tool, comprising dampening means (101) according to a possible embodiment of the present invention, formed by a biaxial actuator (1a). As can be seen, said biaxial actuator (1a) is located in a portion close to the head (102), in a peripheral area (22) of the bar (1000), making it easily accessible for maintenance or replacement.

As can be seen in this figure, the dampening means (101) have a main body (1011), a first and second interface (1012, 1013), attachable to the head (102) and main body (100) of the bar (1000), respectively. This configuration has a housing (23) on the surface in the peripheral area (22), where the casing (11) of the biaxial actuator (1a) is contained. In this case, the modular dampening means (101) are shown, but it could also be that the at least one actuator (1) is housed directly to the main body (100) of the bar (1000) in a housing (23) also located in a peripheral area (22) of the bar (1000).

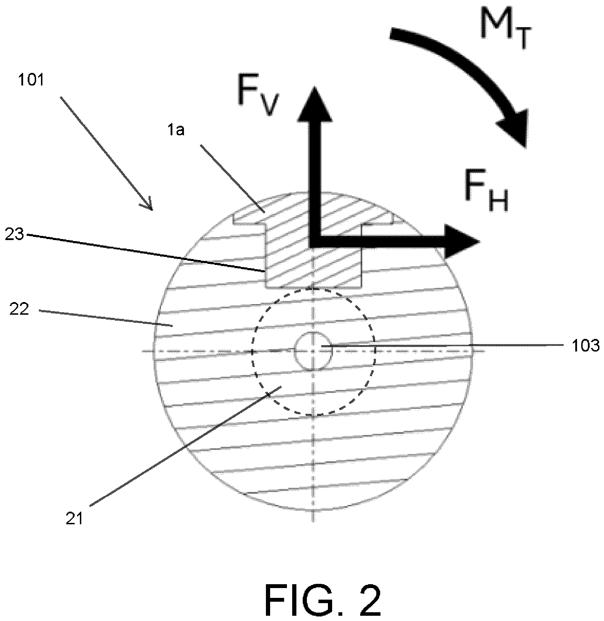

For clarity, figure 2 schematically shows a cross-section of a bar (1000) and a biaxial actuator (1a) according to an embodiment of the present invention. In this embodiment, the biaxial actuator (1a) is capable of exerting a radial force (Fv) and a tangential force (F_{H}). Unlike other previous solutions, the contribution of a double, radial and tangential force in the same plane, makes it possible to achieve, in a simple manner, an equal force in any direction of said plane, i.e., the same excitation of the inertial mass achieves the same dampening effect for any direction of movement of said inertial mass. In addition, the tangential application also dampens the torsional mode of the bar (M_{T}), an effect that is usually of greater relevance for larger bars.

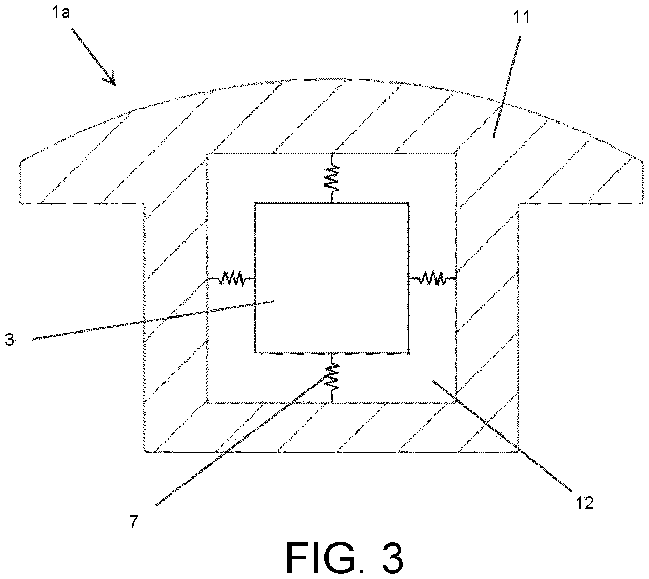

Figure 3 schematically shows a detail of the inertial mass (3) suspended from a biaxial actuator (1a) according to an embodiment of the present invention. The inertial mass (3) is mechanically attached to the casing (11), preferably elastically, by means of springs (7), so that the inertial mass (3) can oscillate inside the cavity (12).

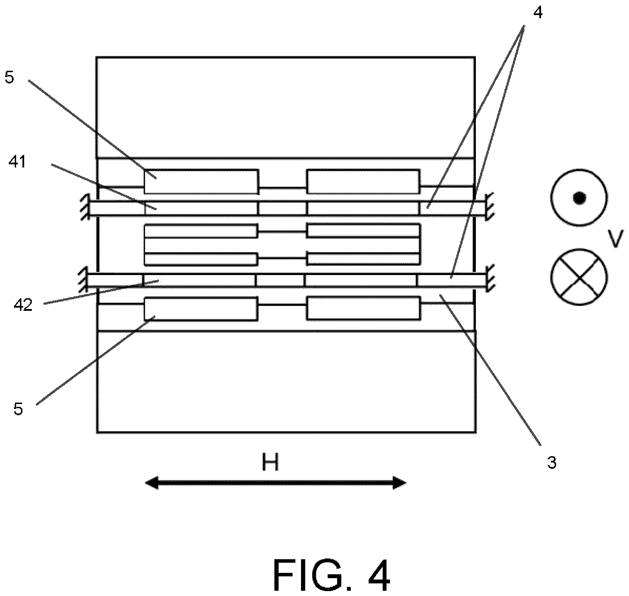

Figure 4 schematically shows a structural detail of the biaxial actuator (1a). Specifically, an upper view of the embodiment described in figure 3 is shown, where the arrangement of the set of coils (4) and permanent magnets (5) that generate a magnetic field can be seen. In this respect, the set of coils (4) is fixed with respect to the casing (11). The set of coils is configured such that a first winding (41) has a main current direction which in conjunction with the magnetic field created by the permanent magnets (5) generates a force in a horizontal direction. Moreover, a second winding (42) has a main current direction, perpendicular to the first winding (41), generating the force in a vertical direction.

As a result, an actuator (1) is obtained where the inertial mass (3) has a movement in the horizontal (H) and vertical (V - in this case, the direction perpendicular to the plane of the drawing) direction. In other words, the inertial mass (3) can move in any direction in a plane perpendicular to the longitudinal direction (8) of the bar (1000).

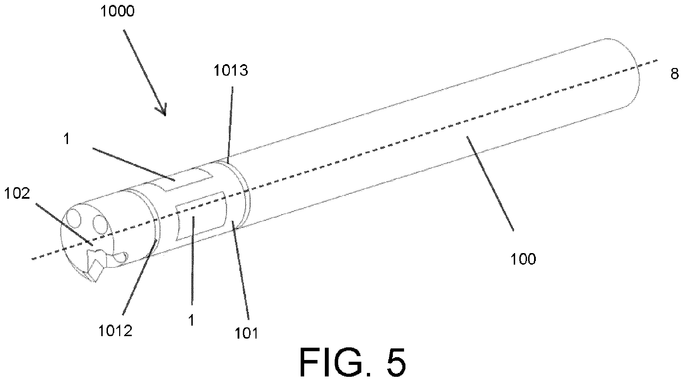

Figure 5 schematically shows a perspective view of a boring bar (1000) comprising dampening means (101) according to the present invention, which comprise two linear (1b) or uniaxial actuators located in the same plane perpendicular to the longitudinal direction (8). This is therefore an alternative embodiment to the use of a biaxial actuator (1a). In this case, the dampening means (101) are shown as modular, but it could also be that the actuators (1b) are housed directly on the main body (100) of the bar (1000) in respective housings (23) also located in a peripheral area (22) of the bar (1000).

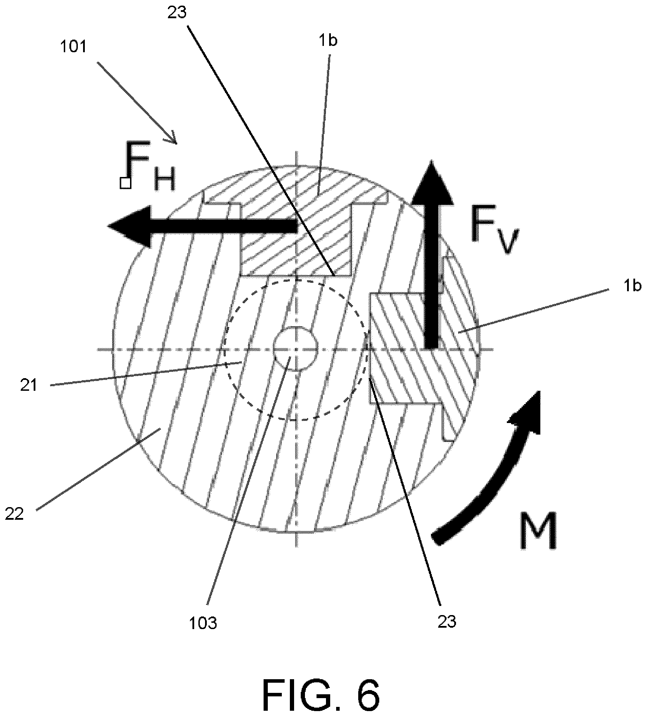

For further clarification, figure 6 schematically shows a cross section of a dampening means (101) comprising two linear actuators (1b). This figure 6 shows how the dampener body (101) has two housings (23) respective to each linear actuator (1b), arranged in the peripheral area (22). In a particular embodiment, as shown in this figure, the two linear actuator modules (1b) of the dampening means (101) are arranged so that the actuation of their respective inertial masses is perpendicular to each other, and both are perpendicular to the longitudinal direction (8).

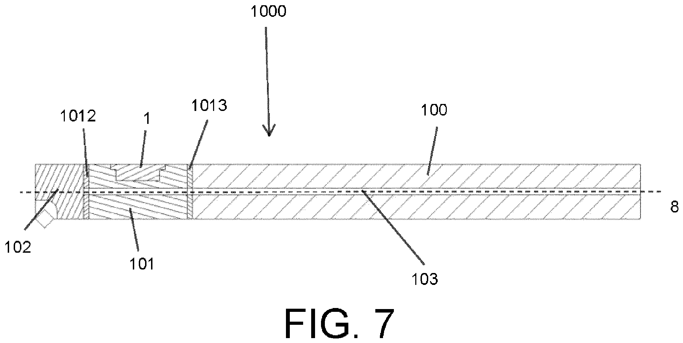

As shown in figure 7, it can be seen how the longitudinal cross section of an actuator (1) can coincide with the cross section of the main body (100). Thus, the central area (21) can be configured to be used for cutting coolant conduits, and wiring of both the sensors placed in the head (102) of the bar, and the dampening means (101) through a central inner duct (103).

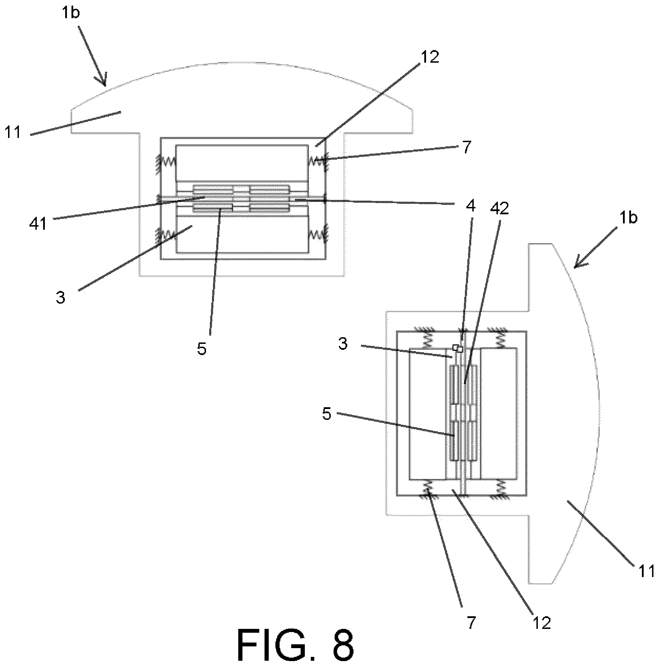

Figure 8 schematically shows a structural detail of the linear actuators (1b). Here it can be seen how the inertial mass (3), mechanically attached to its respective casing (11), is movable in a single direction, in contrast to the inertial mass (3) of the biaxial embodiment. Thus, it is possible to act in any direction in the same plane perpendicular to the longitudinal direction (8) by means of movement composition of the masses (3) of each of the linear actuators (1b) located in two mutually perpendicular directions. Similarly, an elastic connection of the inertial mass (3) to the casing (11), e.g. by means of springs (7), is preferred.

The arrangement of two linear actuators (1b) as described in this embodiment allows for an increase in the ability for torsional vibration compensation compared to those embodiments where a biaxial actuator (1a) is used.

In a particular embodiment, the set of coils (4) is configured to introduce equivalent currents in a low frequency range, preferably from 10 to 100 Hz.

In a particular embodiment, the bar (1000) has a diameter greater than 100 mm and a slenderness (L/D) greater than 14. Vibrations in small diameter bars can be sufficiently well covered by passive dampening solutions and, although an active solution can achieve higher efficiency, it is difficult to compete with the passive solution, as it is difficult to miniaturise an active solution and reach a price equivalent to that of a passive solution due to the cost of the actuator itself as well as the necessary electronics. For larger bars, the passive solution is not good enough, so that active dampening as in the present invention is much more efficient and solves the problems encountered in the state of the art.

Finally the invention is not limited to the specific embodiments described herein, but rather encompasses, for example, the variations that a person with average skill in the art could carry out (for example, in terms of the choice of materials, dimensions, components, design, etc.), within the scope of what may be deduced from the claims.

## Claims

1. A boring bar (1000) comprising active dampening means (101) for lessening vibrations in a machine tool,
a head (102), a main body (100) of the bar (1000), a central area (21) and a peripheral area (22) of the bar (1000);
wherein the dampening means (101) comprise at least one electromagnetic effect actuator (1) comprising:
• at least one casing (11) enclosing a respective cavity (12);
• at least one inertial mass (3), arranged in the cavity (12), movable with respect to the casing (11) of the actuator (1) due to the effect of an electromagnetic field;
**characterised in that** the at least one actuator (1) is located in a respective housing (23), conjugate to the casing (11), in the peripheral area (22) of the bar (1000), and **in that** the dampening means (101) comprise an assembly of coils (4) and permanent magnets (5), configured to act on the same plane perpendicular to the longitudinal direction.

2. The boring bar (1000) according to claim 1, wherein the dampening means (101) further comprise at least one acceleration sensor (not shown), attached to the casing (11) of the actuator (1), configured to measure accelerations of the bar (1000).

3. The boring bar (1000) according to claim 2, wherein the dampening means (101) further comprise control means (not shown) for adjusting currents of the set of coils (4) communicatively connected with the acceleration sensor (not shown) of the actuator (1), the control means (not shown) being configured to adjust currents of the set of coils (4) based on measurements of the accelerations of the bar (1000).

4. The boring bar (1000) according to any one of the preceding claims, wherein the dampening means (101) comprise a first interface (1012), attachable to the head (102) of the bar (1000), a second interface (1013), attachable to the main body (100) of the bar (1000) and a main body (1011) comprising the at least one actuator (1) in its respective housing (23).

5. The boring bar (1000) according to any one of the preceding claims, wherein the set of coils (4) and permanent magnets (5) are configured to act in two mutually perpendicular directions.

6. The boring bar (1000) according to one of the preceding claims, wherein the actuator (1) is a biaxial actuator (1a).

7. The boring bar (1000) according to any one of claims 1 to 5, wherein the dampening means (101) comprise at least two linear actuators (1b).

8. The boring bar (1000) according to claim 7, wherein the two linear actuators (1b) are arranged perpendicular to each other, and in the same plane perpendicular to the longitudinal direction (8).

9. The boring bar (1000) according to one of the preceding claims, wherein the set of coils (4) is fixedly arranged in the cavity (12) with respect to the casing (11) of the at least one actuator (1).

10. The boring bar (1000) according to any one of the preceding claims, wherein the bar is made of metal-coated composite material.

11. The boring bar (1000) according to the preceding claim, wherein the composite material is made by means of automatic fibre laying and winding techniques.

12. The boring bar (1000) according to claim 10 or 11, wherein the composite material is of the carbon-epoxy type.

13. The boring bar (1000) according to any one of claims 10 to 12, wherein the composite material is a combination of PAN and UHM carbon fibres.

14. The boring bar (1000) according to any one of claims 10 to 13, wherein the metal coating is performed using EHLA techniques.

## Amended claims

### Amended claims in accordance with Rule 137(2) EPC.

1. A boring bar (1000) comprising active dampening means (101) for lessening vibrations in a machine tool,
a head (102), a main body (100) of the bar (1000), a central area (21) and a peripheral area (22) of the bar (1000);
wherein the dampening means (101) comprise at least one electromagnetic effect actuator (1) comprising:
• at least one casing (11) enclosing a respective cavity (12);
• at least one inertial mass (3), arranged in the cavity (12), movable with respect to the casing (11) of the actuator (1) due to the effect of an electromagnetic field;
**characterised in that** the at least one actuator (1) is located in a respective housing (23), conjugate to the casing (11), in the peripheral area (22) of the bar (1000), and **in that** the dampening means (101) comprise an assembly of coils (4) and permanent magnets (5), configured to generate an electromagnetic force in a plurality of directions in the same plane perpendicular to a longitudinal direction of an interior of the cavity (12), such that the inertial mass (3) can be displaced in a plurality of directions perpendicular to a longitudinal direction (8) of the bar (1000).

2. The boring bar (1000) according to claim 1, wherein the dampening means (101) further comprise at least one acceleration sensor, attached to the casing (11) of the actuator (1), configured to measure accelerations of the bar (1000).

3. The boring bar (1000) according to claim 2, wherein the dampening means (101) further comprise control means for adjusting currents of the set of coils (4) communicatively connected with the acceleration sensor of the actuator (1), the control means being configured to adjust currents of the set of coils (4) based on measurements of the accelerations of the bar (1000).

4. The boring bar (1000) according to any one of the preceding claims, wherein the dampening means (101) comprise a first interface (1012), attachable to the head (102) of the bar (1000), a second interface (1013), attachable to the main body (100) of the bar (1000) and a main body (1011) comprising the at least one actuator (1) in its respective housing (23).

5. The boring bar (1000) according to any one of the preceding claims, wherein the set of coils (4) and permanent magnets (5) are configured to act in two mutually perpendicular directions.

6. The boring bar (1000) according to one of the preceding claims, wherein the actuator (1) is a biaxial actuator (1a).

7. The boring bar (1000) according to any one of claims 1 to 5, wherein the dampening means (101) comprise at least two linear actuators (1b).

8. The boring bar (1000) according to claim 7, wherein the two linear actuators (1b) are arranged perpendicular to each other, and in the same plane perpendicular to the longitudinal direction (8).

9. The boring bar (1000) according to one of the preceding claims, wherein the set of coils (4) is fixedly arranged in the cavity (12) with respect to the casing (11) of the at least one actuator (1).

10. The boring bar (1000) according to any one of the preceding claims, wherein the bar is made of metal-coated composite material, wherein the composite material comprises automatically placed fibres and the metal coating is preferably produced using EHLA techniques.

11. The boring bar (1000) according to claim 10, wherein the composite material is of the carbon-epoxy type.

12. The boring bar (1000) according to claim 10 or 11, wherein the composite material is a combination of PAN and UHM carbon fibres.
